# EUROPEAN PATENT APPLICATION

(11) **EP 1 058 445 A2**
(43) Date of publication of application: **06.12.2000**
(21) Application number: 00304343.7
(22) Date of filing: 23.05.2000
(51) Int. Cl.: H04M 3/533

(54) **Voice message filtering for classification of voice messages according to caller**

(30) Priority: 03.06.1999 US 325149
(71) Applicant: LUCENT TECHNOLOGIES INC., Murray Hill, New Jersey 07974-0636 (US)
(72) Inventor: Lee, Chin-Hui, Basking Ridge, N.J. 09720 (US); Ramesh, Padma, New Providence, N.J. 07974 (US)
(74) Representative: Buckley, Christopher Simon Thirsk

(57) **Abstract**

A method and system for identifying callers to a voice messaging system and classifying the voice messages according to the callers who generated the messages. Each message can be assigned a priority level based on the caller. This enables priority messaging, which is useful when sorting through a large number of voice messages, and speeds up the process of searching for messages from certain callers. A user (e.g., the message recipient) first registers callers whose messages the user would like classified. Upon receiving a message, the system determines whether the message is from a registered caller and if so, classify the message according to the caller. The classification of messages by caller can then be used to selectively retrieve messages from a selected one or more callers.

## Description

### Related Applications

The present application is related to U.S. Patent Application Serial No. (Attorney Docket No. Lee 22-1), entitled KEY SEGMENT SPOTTING IN VOICE MESSAGES, filed on even date herewith and incorporated herein by reference in its entirety.

### Field Of The Invention

The present invention relates to voice messaging systems and methods, in particular, speaker verification and speaker identification for identifying callers and classifying their voice messages.

### Background Information

In voice messaging systems, such as "voice-mail," a recipient is typically provided with messages in a sequential format based on the order in which the messages were generated. A recipient interested only in messages from a particular caller or callers may be forced to listen to multiple, possibly lengthy voice messages before arriving at the message(s) of interest. Moreover, the messages are presented to the user usually in the order in which they were received, with no attempt to prioritize the messages in terms of importance to the user.

### Summary Of The Invention

The present invention is directed to a method and system for identifying callers to a voice messaging system and classifying the voice messages according to the callers who generated the messages. Furthermore, each message can be assigned a priority level based on the caller. The present invention thus enables priority messaging, which is useful for sorting through a large number of voice messages, and speeds up the process of searching for messages from certain callers.

In an exemplary embodiment of a system in accordance with the present invention, a user (e.g., the message recipient) first registers callers whose messages the user would like classified. Upon receiving a message, the system first determines if the message is from a registered or a non-registered caller. The system then classifies the message according to the caller. The classification of messages by caller can then be used to selectively retrieve messages from a selected one or more callers, thereby allowing a user to retrieve only desired messages instead of being forced to listen to all messages sequentially up to the message(s) the user is interested in. For example, to provide a user with messages from the caller "Tom," an exemplary embodiment of the present invention uses speaker verification and/or identification to detect those messages from "Tom".

If a message is received from an unregistered caller, the user can choose to have that caller registered, thereby allowing further messages from that caller to be classified as being from that caller.

### Brief Description Of The Drawing

FIGs. 1A and 1B illustrate exemplary procedures for registering callers and caller class IDs in accordance with the present invention.

FIGs. 2A and 2B illustrate exemplary procedures for handling messages for caller classification with and without registered caller speech.

FIG. 3 illustrates an exemplary procedure for retrieving caller classified messages.

### Detailed Description

In an exemplary embodiment of the present invention, caller classification and message filtering is achieved by the following procedure.
1. A user (e.g., message recipient) registers the caller(s) whose voice messages the user would like to spot. During the registration procedure, characteristics of the caller's speech are stored. The user can also specify a call priority level and/or classification for each caller.
2. When a message is received, its caller, if registered, is determined by performing speaker identification and/or verification using the stored caller speech characteristics. An indication of the caller is stored for each message from a registered caller.
3. When the user requests messages of a particular caller, the messages from that caller are retrieved using the caller indication. The user can also request messages with a given call priority level (or range of levels). Messages from all of the call classes with the given priority level are then retrieved.

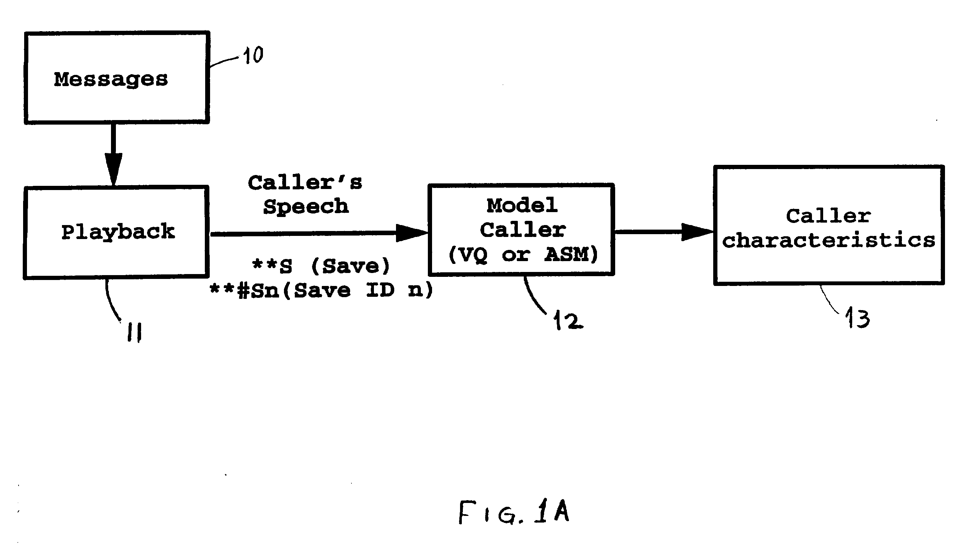

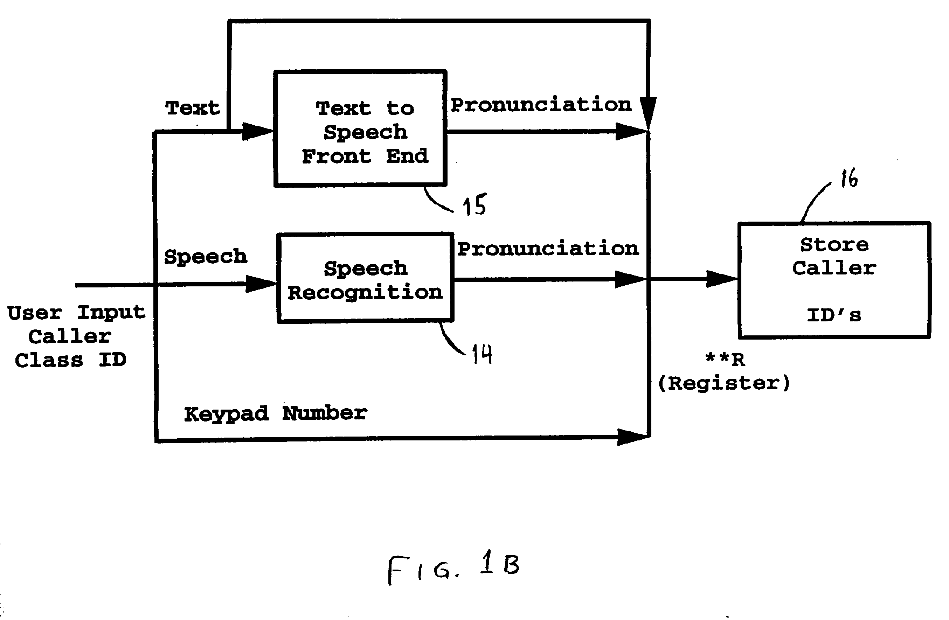

An exemplary registration procedure is illustrated in FIGs. 1A and 1B. As shown in FIG. 1A, the user first listens to a message 10 from a caller by playing-back the message at 11. If the user so desires, the user registers the caller by pressing a predefined sequence of keys, such as **S (for save). The caller's characteristics are then determined at 12 such as by vector quantization (VQ) or acoustic segment modeling (ASM) and stored at 13 as a code book or an acoustic segment model with Hidden Markov Models (HMM). (See, e.g., K. C. Pan et al., "An efficient vector-quantization preprocessor for speaker independent isolated word recognition," Proc. Int. Conf. Acous., Speech, and Sig. Processing, pp. 874-877, Mar. 1985; U.S. Patent No. 4,783,804; L.R. Rabiner, "A Tutorial on Hidden Markov Models and Selected Applications in Speech Recognition," Proc. IEEE, Vol. 77, No. 2, pp. 257-286, Feb. 1989).

Once a caller's characteristics have been stored (FIG. 1A), the user is prompted to enter a caller ID for the caller (FIG. 1B). The user provides a caller ID either by speech, as text from a keyboard, if available, or as a number on a telephone dialpad (e.g., #5). The caller ID entered by the user is then registered when the user, for example, presses a predefined sequence of keys (such as **R).

If the user specifies the caller ID by speaking it, the pronunciation of the caller ID is obtained at 14 by speaker-independent speech recognition, and is stored. For example, the speech recognition function can be implemented in accordance with the methods and systems described in U.S. Patents Nos. 4,713,777, 4,718,088, 5,509,104, 5,579,436, and/or 5,649,057. If the caller ID is entered as text, a text-to-speech front end at 15 is used to determine the pronunciation. Such a text-to-speech front end can be implemented as described in "Multilingual Text-to-Speech Synthesis: The Bell Labs Approach" by R. W. Sproat, Kluwer Academic Publishers, 1998.

At 16, the caller ID is stored. If the ID was entered as a number on a dialpad, or as text on a keyboard, the entered number or text is stored as the ID. If the ID was entered as speech, the pronunciation of the ID is stored. If the ID was entered as text, the text and/or pronunciation of the text is stored. In this case, storing the pronunciation of a caller ID allows the user to later retrieve messages from that caller by speaking the caller ID. As an alternative, or additionally, storing the caller ID as text allows messages from that caller to later be retrieved by entering the caller ID as text.

In an alternative embodiment, the caller registration procedure of FIGs. 1A and 1B can be streamlined. In such an embodiment, upon pressing **S after playing back a caller's message, the user can also specify an ID number for the caller. In other words, the user can press, for example, **Sn on his telephone dialpad, where n is the ID number for that caller.

If desired, the user can assign a call priority level to each caller by pressing a predefined sequence of keys (e.g., #3**I for a priority level of 3), by entering the priority level as text, or by entering the priority level by speech. Messages from callers that are not assigned a priority level by the user are assigned a default priority level (e.g., lowest priority).

The registration procedure for a caller terminates when the user presses a predefined sequence of keys (e.g., ##).

As can be understood in light of the disclosure herein, a variety of registration procedures are possible within the scope of the present invention, with the preferred procedure depending in part on the hardware available to the user (e.g., keypad vs. dialpad) and on the user's preferences (e.g., voice vs. dialpad).

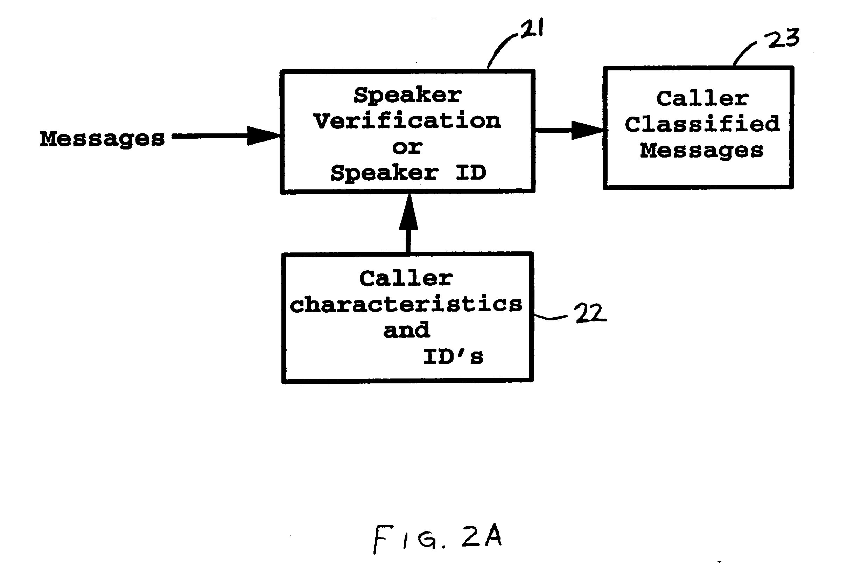

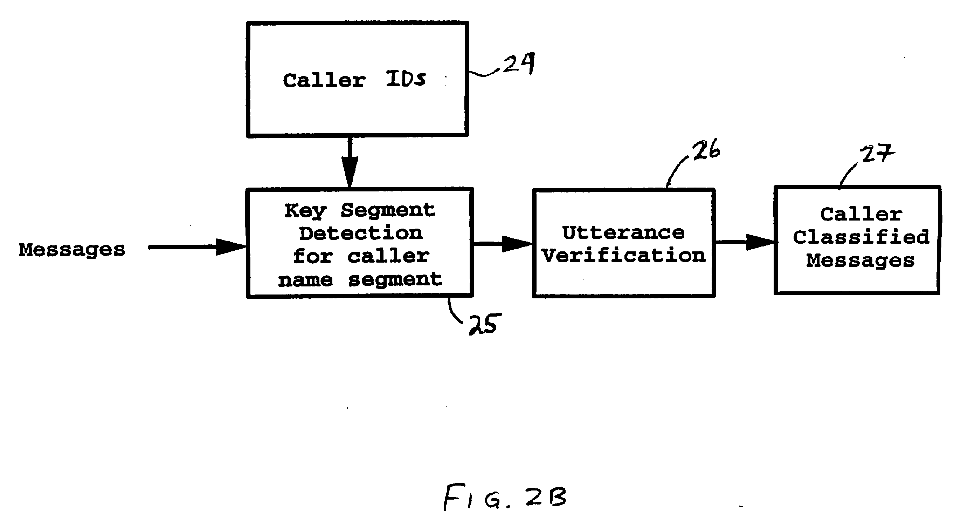

Once one or more callers have been registered, incoming messages are handled in accordance with the procedures of FIGs. 2A and 2B. As shown in FIG. 2A, each message that is received is compared to the registered callers' voice characteristics at 22. Speaker identification is performed at 21 or speaker verification can be performed sequentially using all of the registered voice characteristics to identify the caller of the message. Speaker identification can be implemented as described in U.S. Patent No. 4,363,102. Speaker verification can be implemented as described in U.S. Patent No. 5,675,704. Once the caller of the message has been identified, the message is then tagged at 23 with the caller ID. The messages are thereby classified by caller. Messages whose callers have not been identified are classified as belonging to a default class (e.g., "other").

In an exemplary embodiment of the present invention, a user can provisionally register a caller without first having a message from that caller and thus without having that caller's voice characteristics. This capability is useful where the user is expecting a message from a caller of interest who has yet to leave a message. In this case, the user speaks or enters as text the caller's name (or the pronunciation thereof) as shown in FIG. 1B. A message from such a caller can then be handled in accordance with the exemplary procedure of FIG. 2B.

As shown in FIG. 2B, key segment detection can be performed at 25 on the message to search for a segment which provides the caller's name (or other caller-identifying information) such as "My name is ..." or "This is ..." The key segment detection at 21 can be implemented in a known way using conventional wordspotting or phrase detection technology, such as described in U.S. Patent No. 5,509,104. The key segment detection can be followed by utterance verification at 26. This can be done using speaker-independent subword Hidden Markov Models (HMM) and the pronunciation of the key segment. Utterance verification can also be performed as described, for example, in U.S. Patent No. 5,675,706.

Once the caller's name (or other identifying information) has been extracted from the message, the message is then classified at 27 as a message from that caller. For example, if the phrase "My name is Tom" or "This is Tom" is detected (at 25) and verified (at 26) in a message from a provisionally registered caller Tom, the message is classified at 27 as a message from the caller Tom. Moreover, voice characteristics are extracted from that message and stored for that caller, in accordance with the procedure of FIG. 1A. The caller is thereby registered. The user may also be prompted to specify a priority level for the new caller, as described above.

In a further exemplary embodiment, any unknown caller who indicates their name or other identifying information can be registered automatically, without first being provisionally registered. In this case, in the procedure of FIG. 2B, key segment spotting is performed to detect the phrase "My name is..." or "This is..." The name following such a phrase is then used as the caller ID for that caller. The voice characteristics of that caller are extracted from the message and the caller is registered as described above. In addition, the message is stored and classified as being from that caller. At a later time, e.g. at the time of message retrieval, the user may be prompted to specify a priority level for the newly registered caller.

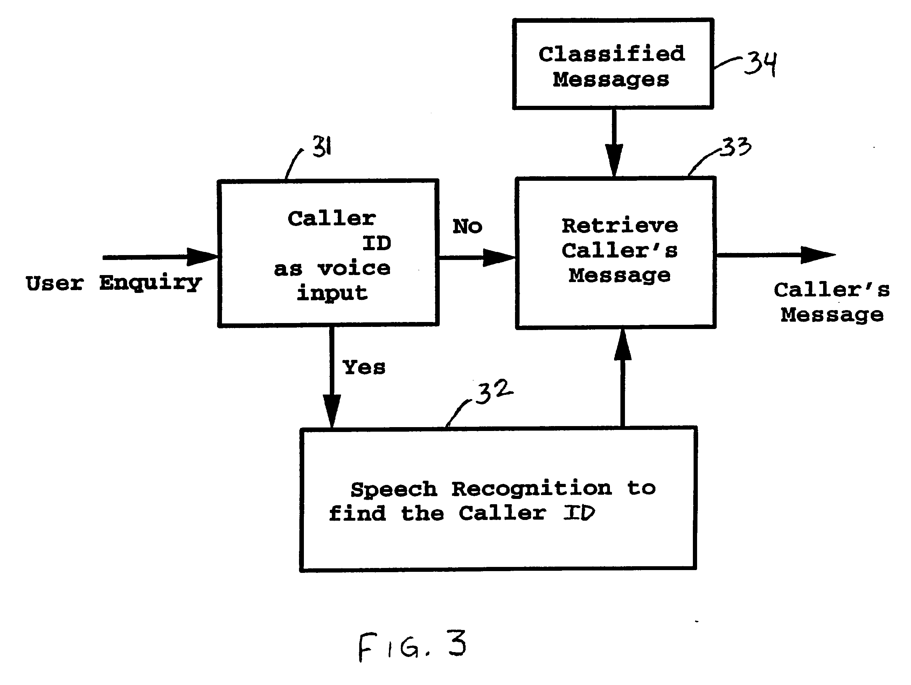

An exemplary procedure in accordance with the present invention for retrieving caller classified messages is shown in FIG. 3. The retrieval procedure begins when the user requests messages from a particular caller by either speaking the caller ID, typing the caller ID, or by pressing a predefined sequence of dialpad keys representing the caller ID (e.g., #5**M for the caller class 5). If it is determined at 31 that the user has provided the caller ID by speech, speech recognition is performed at 32 and a search is performed of the registered caller ID's to determine the requested caller ID.

Using the caller ID information, either as entered by the user or as determined at 32, any messages from the requested caller are retrieved at 33 and played back to the user sequentially. After those messages have been played back, the system can prompt the user for further instructions. For example, the user can instruct the system to play back messages from other callers the user may request, all other messages or no further messages.

The procedure of FIG. 3 can also be readily adapted to allow the user to retrieve messages in accordance with priority level. For instance, the user may assign a high priority level (e.g., 1) to family members. At 31, the user can specify that he would like to retrieve only those messages from callers of priority level 1. If the user has requested messages with a particular priority level (e.g., by pressing #[N]**C for calls with a priority level of N), all messages from those callers of that priority level are played back sequentially. Or, if the user does not specify a priority level, the system, by default, can retrieve messages in order of priority, with those messages from high priority callers being played back before messages from lower priority callers.

As can be understood in light of the present invention, the precise order and presentation of messages can be tailored to suit the user's preferences. The ability to classify messages by caller, as provided by the present invention, allows for many possibilities. In addition to categorizing callers by priority level, callers can also be categorized in any way the user may prefer, such as , family member, friend, business contact, etc.

In addition to caller classification and message retrieval, a list of all of the registered callers can be provided to a user upon request. The user can request such a list, for instance, by pressing a predefined sequence of keys (e.g., **L).

Furthermore, in order to provide secure access to the messages, speaker verification can be used to verify that a user seeking access to the messages is an authorized user.

Caller classification can also be achieved by registering the phone number for the caller and extracting the telephone number using Caller ID or Automatic Number Identification (ANI), if available.

## Claims

1. A method of classifying voice messages generated by one or more callers, comprising the steps of:
receiving a voice message;
analyzing the voice message to determine a caller who generated the voice message;
classifying the voice message in accordance with the caller.

2. The method of claim 1, comprising the step of registering a caller, including:
determining an identification for the caller; and
storing voice characteristics for the caller.

3. The method of claim 2, wherein the step of registering a caller includes determining a priority level for the caller.

4. The method of claim 2, wherein the message is retrieved using the caller identification.

5. The method of claim 3, wherein the message is retrieved using the priority level.

6. The method of claim 2, wherein the step of determining an identification of the caller includes performing key segment spotting on the message for spotting a name key segment.

7. The method of claim 6, wherein the step of determining an identification of the caller includes performing utterance verification on the name key segment.
